# EUROPEAN PATENT APPLICATION

(11) **EP 4 732 727 A1**
(43) Date of publication of application: **29.04.2026**
(21) Application number: 25210588.7
(22) Date of filing: 22.10.2025
(51) Int. Cl.: A47J 37/04

(54) **APPARATUS FOR ROTISSERIE COOKING**

(30) Priority: 22.10.2024 IT 202400023562
(71) Applicant: Doro dps di Necsuliu Gheorghe, 10067 Vigone (TO) (IT)
(72) Inventor: NECSULIU, Gheorghe, 10067 Vigone (TO) (IT)
(74) Representative: Mola, Edoardo

(57) **Abstract**

Rotisserie cooking apparatus comprising:
• a heat source (1)
• a structure (2) rotating around a vertical axis carrying a plurality of pinions (P1), each of which defines a hole wherein the plurality of perforated pinions (P1) have a common axis of revolution defined by the vertical axis and each pinion has an individual axis of rotation, around which the pinion (P1) is driven into rotation by the rotating structure, and wherein at least one of the pinions (P1) comprises an elastic element (EL1) and an insert (IN1) movable between a first position in which the insert (IN1) is advanced inside the hole thanks to the action of the elastic element and the pinion does not carry a spit element; and a second position in which the skewer element is inserted into the pinion (P1) and the insert is retracted against the action of the elastic element (EL1) and kept in contact with the spit, exerting pressure on it through the elastic element to keep the spit element suspended in the corresponding hole by friction.

## Description

### TECHNICAL FIELD

The present invention relates to a rotisserie cooking apparatus.

### STATE OF THE ART

Rotissiers are used to cook foods such as meat and vegetables. Rotisseries allow food items to be slowly cooked while the fat or cooking residue is drained from the food. Typically, the food is placed on a spit for cooking, where it rotates while the fat or grease is drained. The disadvantages of traditional rotisserie cooking appliances include difficulty in cleaning, difficulty in inserting and removing food, and difficulty in ensuring even cooking. Heat distribution within the rotisserie can be uneven, resulting in hot and cold spots that negatively affect cooking quality.

It will therefore be appreciated that there is a need for a rotisserie cooking system in which all components are easily accessible to improve cleaning and thus product health, and in which heat exposure is uniform, thus cooking the food uniformly.

### SUMMARY OF THE INVENTION

The above-mentioned problems are solved by the apparatus claimed in claim 1. The invention therefore provides a rotisserie cooking apparatus comprising a heat source and a rotating system exposed to said heat source. The rotating system comprises a plurality of pinions, designed for the rapid attachment and release of a spit element, preferably a wooden spit, carrying the food to be cooked. The coupling/release system comprises an insert, preferably a ball, inside the pinion hole, a groove along the outer circumference of the longitudinal body of the pinion, and an elastic element, preferably a spring, inserted into the groove. The pinion thus designed has two positions: one rest position, in which there is no spit element and in which the ball is advanced inside the hole thanks to the action of the elastic element, and the second, in which the spit is inserted into the pinion hole and the ball is retracted against the action of the elastic element and exerts pressure on the body of the spit element, securing it in the pinion by friction.

### BRIEF DESCRIPTION OF THE DRAWINGS

The invention is described below based on non-limiting examples illustrated by way of example in the following figures, which refer respectively to:
Figure 1. Axonometric view of the rotisserie apparatus.
Figure 2. Schematic view of the rotating structure.
Figure 3. Exploded view of the rotating upper structure of the rotisserie apparatus.
Figure 4. Top view of the pinion-bearing element and the ring gear.
Figure 5. Image of the pinion according to the present invention with (left) and without (right) the elastic element in the groove

### DETAILED DESCRIPTION OF THE INVENTION

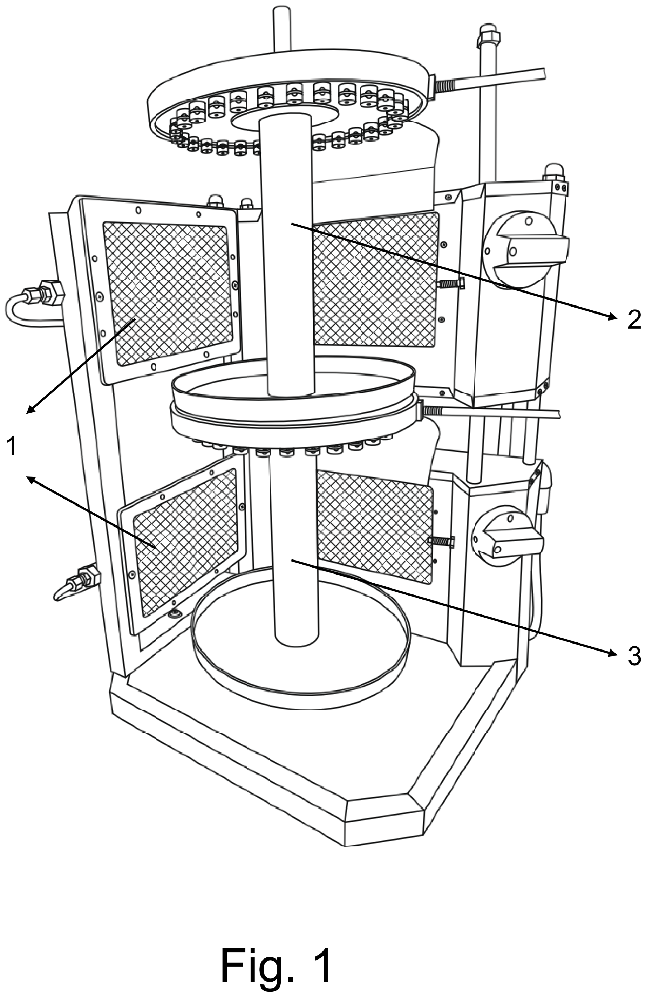

The present invention relates to an apparatus for cooking food carried by spit elements, and Figure 1 shows an embodiment of the present invention. In this embodiment, the apparatus comprises a heat source 1, preferably gas, and a rotating structure in which the spit elements are inserted. Specifically, Figure 1 shows two rotating structures 2, 3, one above the other; however, only one can be used. Since the rotating structures are equivalent, only one will be discussed in detail.

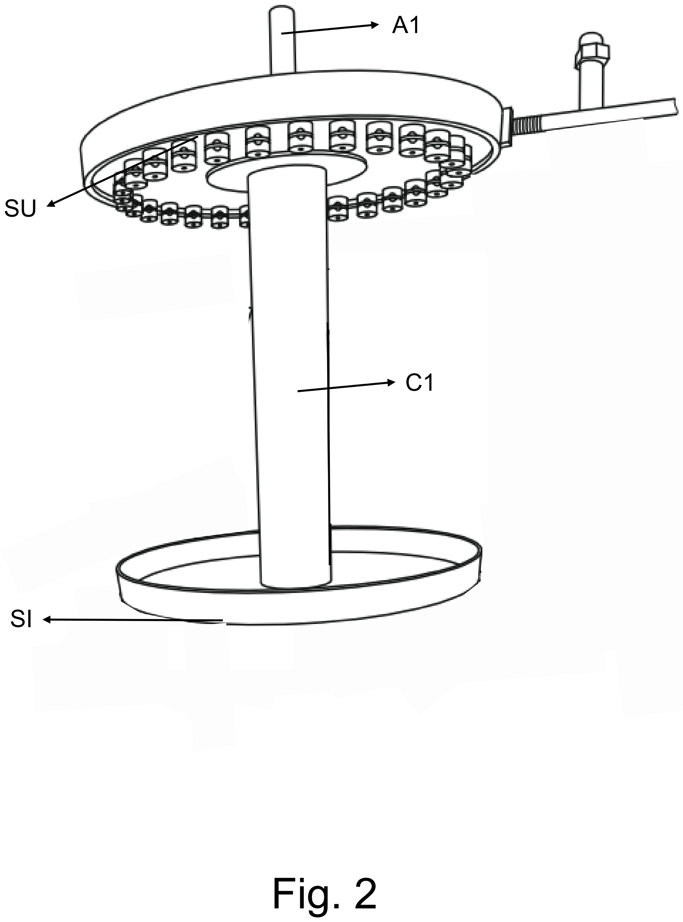

The rotating structure, shown in Figure 2, comprises an upper structure SU and a lower structure SI connected by a hollow longitudinal elongated body C1 in which a rotational transmission shaft A1 is inserted. The rotating transmission shaft is housed in the base of the apparatus, as shown in Figure 2, and is driven by a motor (not shown). According to another embodiment, the rotation of the drive shaft occurs via a rotation actuation gear parallel to the engine, having a socket for external actuation, preferably by hand, so that the rotation of the structure can occur even when the engine is off. Specifically, this manual movement preferably comprises a bevel gear with a reduction ratio. Furthermore, said socket for external actuation is not an integral part of the structure, but is removable, i.e., said socket can be disassembled.

The upper structure SU of the rotating structure supports the spit elements, while the lower structure SI is a collection portion for the waste material generated during cooking.

The rotational drive shaft is constrained in the upper structure and has a single degree of freedom, i.e., translation along the vertical axis of the rotating body. Before describing the rotation of the rotational drive shaft with the upper structure, it is necessary to describe the latter's components.

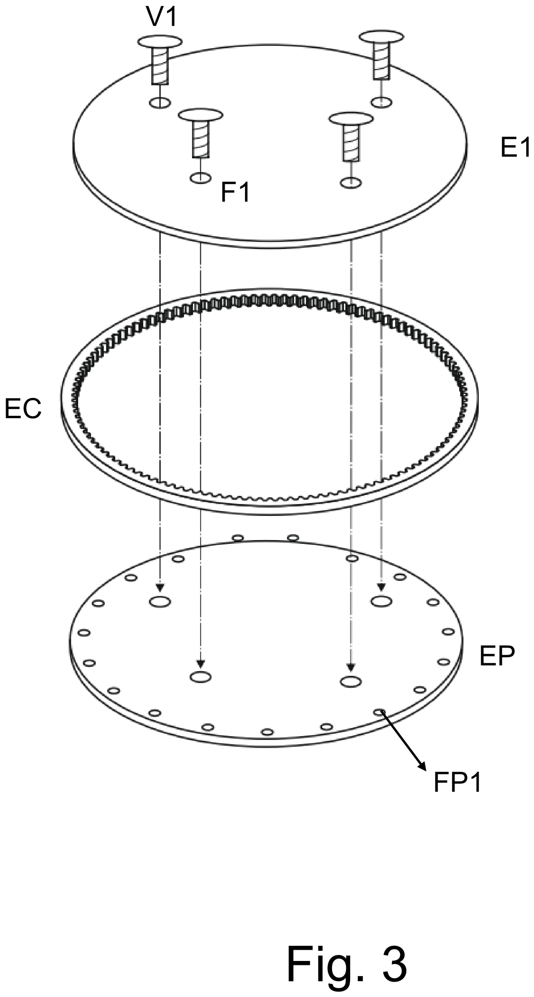

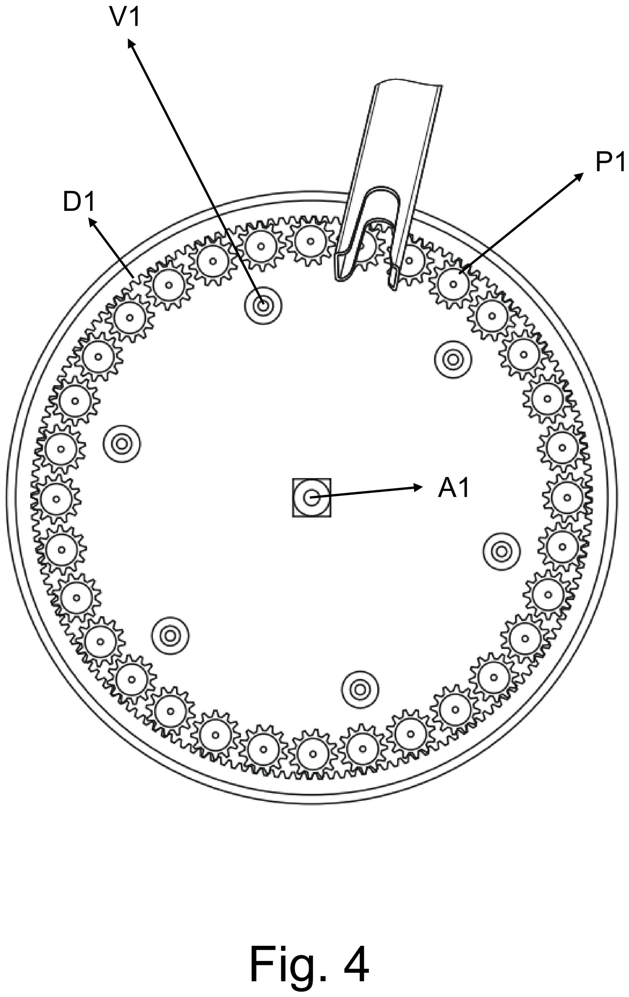

The upper structure is shown in an exploded view in Figure 3 and comprises a plurality of elements, preferably three elements, and preferably configured in vertical layers (as shown in Figure 3). The first element is a cover element E1 comprising holes (F1) for inserting screws and a central hole (not shown in Figure 3, but shown in Figure 4) through which the rotating drive shaft passes. The central element EC is hollow and has teeth along its internal surface; that is, the central element is a ring gear EC. The third element, EP, carries the pinions (not shown in the figure) through a plurality of holes along its end. Furthermore, this element has a second set of holes to accommodate the screws passing through the first element; therefore, the first element and the third element are connected to each other via a plurality of screws. Furthermore, the third element has a central hole through which the rotating drive shaft passes.

In conclusion, the first and third elements have a complementary structure. Both have holes for a plurality of screws so they can be secured to each other and also have a central hole through which the rotating drive shaft passes.

The central element, EC, has a larger radius than the first E1 and the second EP elements. Thus, when the upper structure is assembled, the teeth D1 of the central element mesh with the pinions P1 carried by the plurality of holes in the third element, as shown in Figure 4. It should also be noted that in the third element, the position of the pinion holes along the perimeter FP1 must be such that, when assembled with the central body, the pinions can mesh with the teeth of the central body.

The lower structure is connected to the elongated central body. In one embodiment, the connection is permanent, i.e., the central body is fused to the lower structure. However, a snap-fit connection between the lower structure and the elongated body is also possible. The lower structure includes a central hole through which the elongated body passes, and thus the drive shaft that drives the upper structure. Furthermore, the lower structure has a cup-like structure, as its function is to collect the waste produced during cooking of the food in question.

In use, the rotation of the rotating drive shaft causes the first and third elements of the upper structure to rotate as a single unit, as the drive shaft is constrained in the central hole of both elements. The central element, however, does not rotate because it is fixed by screws. Therefore, of the three elements stacked in the central portion, only two elements rotate, while the ring gear remains stationary. Since the third element carries pinions meshed with the teeth of the stationary element, i.e., the ring gear, the rotation of the third element in turn causes the pinions to rotate around their axis. In conclusion, the present invention comprises a plurality of rotation axes, the first rotation axis being the rotation axis of the rotating drive shaft, and all the others being the rotation axes of the individual pinion. Therefore, the number of rotation axes corresponds to the number of pinions plus one. Specifically, each pinion has two axes of rotation: the first is a rotation axis and the second is a revolution axis. The rotation axis corresponds to the rotation of the pinion around its own axis, and the revolution axis corresponds to the revolution of the pinion around the rotation axis of the rotating drive shaft. The revolution axis, i.e., the rotation axis of the rotating structure, is called the vertical axis. It should be noted that each pinion has its own rotation axis, while the revolution axis, i.e., the vertical axis, is common to all pinions.

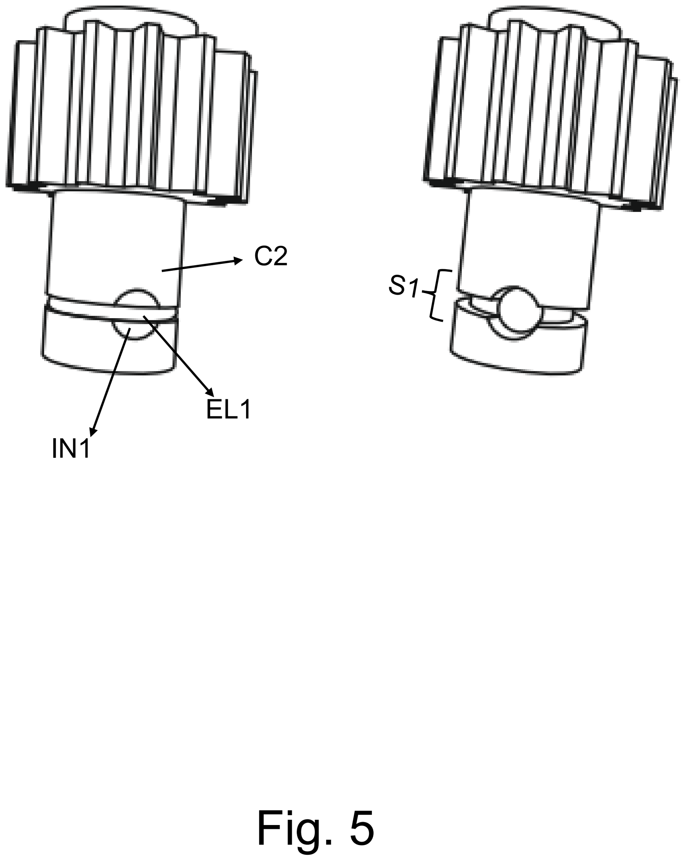

An example of a pinion according to the present invention is shown in Figure 5. The pinion comprises a groove S1 along the external surface of the central body C2 and an insert IN1, preferably a sphere, inside the hole of the central body. An elastic element EL1, preferably an annular spring, is inserted into the groove and wraps around the external surface of the pinion along the groove. The ball-spring system is movable between two positions. In the first position, corresponding to a rest position, the sphere is advanced inside the hole thanks to the action of the annular spring. The second position occurs when an element is inserted into the hole of the pinion, preferably a spit element, preferably a wooden spit. In the second position, the sphere is retracted against the action of the spring and is in contact with the skewer element. In this way, the spit element is held securely by the pinion because the spring exerts pressure on the ball, which in turn exerts pressure on the spit element, securing it inside the pinion hole. This means that the spit element remains suspended in the corresponding hole by friction. When the spit element is removed, the spring acts on the ball, returning it to its original position.

Advantageously, this fastening system allows the operator free access to the pinion hole, facilitating cleaning and recovery in the event that the spit element inserted into the pinion breaks inside.

Advantageously, the rotation and revolution system allows for faster cooking of the food because exposure to the heat source is more uniform and controlled. Furthermore, being an automated mechanism, the operator does not need to intervene manually to ensure even cooking of the food.

Advantageously, the pinion hole is through-hole so that, in the event of charred fragments inside the pinion, it can be cleaned using a simple elongated element, such as an awl.

According to a not shown embodiment, the pinions are engaged in a chain or other flexible endless transmission element, and a tensioner applied to the chain compensates for thermal expansion during operation. The chain engages a ring gear that is fixed to rotation and coaxial with shaft A1, preferably rigidly fixed to shaft A1, so that, when the cover element E1 rotates, the chain rotates the pinions. The tensioner is preferably supported by the cover element E1 and is spring-loaded.

According to a not shown embodimentd, below the pinions, the cooking apparatus comprises at least two cooking fat collection trays supported by the lower structure S1 around the elongated body C1. In order to prevent grease from accidentally falling into the gap, even a small one, between two adjacent tanks and thus soiling the lower structure SI, one of the at least two tanks includes a protruding lip that, when the tanks are positioned around the elongated element C1 to collect the cooking grease, covers the gap between two adjacent tanks. In this way, the grease falls onto the lip and is subsequently collected in one of the two tanks without falling into the gap between the two tanks.

Advantageously, the motor is configured with rotation reversal and the appliance also includes a motor control device configured to periodically reverse the rotation of the rotating structure (2) within an angle of less than one full turn. In this way, it is possible to hang skewers on adjacent pinions to cover a circular sector of less than 360° and alternate the direction of rotation so that the circular sector always faces the heat source 1 during the periodic variation of the direction of rotation. This allows for reduced cooking times when the appliance is not fully loaded.

## Claims

1. Apparatus for rotisserie cooking comprising:
• a heat source (1),
• a rotating structure (2) around a vertical axis that carries a plurality of pinions (P1) each of which defines a hole,
wherein the plurality of perforated pinions (P1) has a common axis of revolution defined by the vertical axis, and each pinion has an individual axis of rotation around which the pinion (P1) is rotated by the rotating structure, and wherein at least one of the pinions (P1) comprises an elastic element (EL1) and an insert (IN1) movable between a first position in which the insert (IN1) is advanced inside the hole due to the action of the elastic element and the pinion does not carry a spit element, and a second position in which the spit element is inserted into the pinion (P1), and the insert is retracted against the action of the elastic element (EL1) and kept in contact with the spit, exerting pressure on it via the elastic element to keep the spit element suspended in the corresponding hole by friction.

2. Apparatus according to claim 1, wherein the insert (IN1) is a sphere and the elastic element (EL1) is an annular spring surrounding the pinion (P1).

3. Apparatus according to claim 1 or 2, wherein the upper structure comprises:
• a pinion-carrying element (EP),
• a fixed crown (EC) carrying an internal toothed gear (D1),
wherein the pinions (P1) mesh with the toothed gear (D1) so that when the pinion-carrying element (EP) rotates the pinions (P1) around the vertical axis, the pinions (P1) rotate around their own axes.

4. Apparatus according to any one of the preceding claims, wherein the upper structure (SU) also comprises a cover element (E1) that rests on the toothed crown (EC) and engages with the pinion-carrying element (EP), wherein the cover element (E1) faces the meshing teeth (D1) of the toothed crown (EC) and the pinions (P1) to define a barrier preventing unwanted material from entering the meshing teeth.

5. Apparatus according to one of the preceding claims, in which the rotation of the rotating portion occurs via a drive shaft (A1).

6. Apparatus according to one of the preceding claims, comprising a motor for driving the rotation of the structure and a gear for actuating the rotation parallel to the motor and having a coupling for external actuation, preferably manual, so that the rotation of the structure can also occur with the motor turned off.

7. Apparatus according to claim 1, comprising a chain or other endless flexible member for rotating the sprockets and a tensioner for tensioning the chain.

8. Apparatus according to any preceding claim, comprising at least two trays arranged in use beneath the sprockets to collect cooking fat, wherein one of the trays comprises at least one lip protruding so as to cover in use a gap between two adjacent trays so that the fat falling on the lip is then collected in one of the two adjacent trays by gravity.

9. Apparatus according to any preceding claim, wherein said hole is through.

10. Apparatus according to any preceding claim, comprising a reversing motor for rotating the sprockets and a motor controller configured to periodically reverse the rotation of the rotating structure (2) within an angle of less than one full revolution.
